# EUROPÄISCHE PATENTSCHRIFT

(11) **EP 3 359 608 B1**
(45) Veröffentlichungstag und Bekanntmachung des Hinweises auf die Patenterteilung: **04.12.2019**
(21) Anmeldenummer: 16778008.9
(22) Anmeldetag: 06.10.2016
(51) Int. Cl.: C09D 5/00

(54) **FORMSTABILE, ABREIBBARE ZUBEREITUNG ENTHALTEND PLÄTTCHENFÖRMIGE PARTIKEL**
ABRADABLE DIMENSIONALLY STABLE PREPARATION CONTAINING PLATELET-SHAPED PARTICLES
COMPOSITION DE FORME STABLE, ABRADABLE, CONTENANT DES PARTICULES SOUS FORME DE PLAQUETTES

(30) Priorität: 06.10.2015 DE 102015219309
(43) Veröffentlichungstag der Anmeldung: 15.08.2018
(73) Patentinhaber: Henkel AG & Co. KGaA, 40589 Düsseldorf (DE)
(72) Erfinder: HELLWIG, Nils, 47800 Krefeld (DE); SCHRIEFERS, Mathias, 41199 Mönchengladbach (DE)
(86) Internationale Anmeldenummer: PCT/EP2016/073873
(87) Internationale Veröffentlichungsnummer: WO 2017/060348

(56) Entgegenhaltungen:
- DE-A1-102009 037 932
- DE-A1-102009 037 935
- US-A1- 2012 107 625

## Beschreibung

Die vorliegende Erfindung betrifft eine formstabile, auf flächigen Werkstoffen abreibbare Zubereitung enthaltend eine transluzente, Wasser basierte Trägermasse und plättchenförmige Feststoffpartikel, wobei die plättchenförmigen Feststoffpartikel einen mittleren größten Partikeldurchmesser im Bereich von 2 bis 40 µm aufweisen. Die plättchenförmigen Feststoffpartikel sind dabei für einen durch das menschliche Auge deutlich wahrnehmbaren Glitzereffekt bei gleichzeitig guten Abriebseigenschaften in einem durch die gewählte Partikelgröße vorbestimmten Volumenanteil in der Zubereitung enthalten. Darüber hinaus besitzen erfindungsgemäße Zubereitungen in einem Teilaspekt der vorliegenden Erfindung klebende Eigenschaften, so dass der abgeriebene Film zur Befestigung von flächigen Dekorelementen oder allgemein zum Verkleben flächiger, poröser Werkstoffe bestens geeignet ist.

Konsumentenartikel zur farblichen Gestaltung von Papier, Kartonagen und Vliesen werden im Markt in unterschiedlichsten Darreichungsformen vertrieben, bspw. in Form von Malstiften, Pinselfarben, Kreiden, Stickern und Ähnlichem. Derartige Konsumentenartikel sollen im Regelfall, gerade wenn sie ausschließlich in Verbindung mit kreativen Tätigkeiten, wie Malen und Basteln, Verwendung finden, eine außergewöhnliche Gestaltung der genannten Materialien ermöglichen. Es ist seit jeher bekannt und üblich, Pigmente als Träger eines optischen Effektes, sei es Farbe, Glanz oder Leuchtkraft, einzusetzen, um Gegenständen des täglichen Bedarfs oder der künstlerischen Gestaltung erfolgreich einen höheren ästhetischen Wert zu verleihen. Demgemäß sind Stifte zur farblichen Gestaltung kommerziell erhältlich, die eine permanente linien- und flächenförmige Gestaltung derart ermöglichen, dass neben dem Kenntlichmachen der Linien und Flächen zugleich mit der Tinte auch Pigmente aufgetragen werden. Die dabei im gestalteten Bereich aufgetragenen Pigmente vermitteln aufgrund ihrer Reflexionseigenschaften gegenüber sichtbarem Licht einen Glanzeffekt, der bei Änderung der relativen Lage der Papieroberfläche zum einfallenden Licht im gestalteten Bereich Lichtreflexe in Erscheinung treten lässt. Der Betrachter nimmt die Vielzahl der Lichtreflexe während einer solchen relativen Lageänderung als Glitzereffekt wahr.

Für einen solchen Glitzereffekt können plättchenförmige partikuläre Feststoffe bspw. als Granulat oder Pulver, verwendet werden, die bereits das Glanzpigment mit den entsprechenden optischen Eigenschaften darstellen oder es zumindest auf ihrer Oberfläche oder oberflächennah immobillisiert enthalten.

Vorliegend problematisch ist, dass die Darreichungsform der partikulären Feststoffe enthaltend das Glanzpigment die Eigenschaft besitzen muss, dass die partikulären Feststoffe mit ihrer Hilfe gleichmäßig auf dem flächigen Substrat aufgebracht werden können. In flüssigen Zubereitungen tritt häufig das Problem auf, dass die partikulären Feststoffe, die für einen sichtbaren Glitzereffekt zumindest 2 µm groß sein müssen, sedimentieren und vor dem Auftragen des Flüssigmediums zunächst in selbigen möglichst homogen verteilt werden müssen. Umgekehrt muss für feste Zubereitungen gewährleistet sein, dass ein homogener, möglichst dünner Film der Zubereitung enthaltend den partikulären Feststoff auf dem flächigen Substrat abgerieben wird.

Bisher ist jedoch keine Darreichungsform der Glanzpigmente zur optischen Gestaltung von flächigen Werkstoffen bekannt, die kontrolliert im Kontaktbereich der Darreichungsform mit dem flächigen Substrat einen homogenen den partikulären Feststoff enthaltenden Film aufzubringen vermag, der bei Änderung der relativen Lage des flächigen Substrates zum einfallenden Lichts einen glitzernden Eindruck beim Betrachter hinterlässt.

Weiterhin ist es wünschenswert, der Darreichungsform noch die zusätzliche Eigenschaft zu verleihen, weitere Werkstoffe oder Dekorelemente stoffschlüssig verbinden zu können, also Klebeeigenschaften zu besitzen. Damit gelänge sowohl die rein ästhetische Gestaltung der Oberfläche als auch die kreative räumliche Gestaltung der flächigen Werkstoffe durch stoffschlüssiges Verbinden mittels ein und derselben Darreichungsform.

Es sind unterschiedlichste Zubereitungen von insbesondere für flächige, poröse Werkstoffe geeigneten Klebstoffen bekannt, die gerade in jüngerer Zeit auf flüssigen oder formstabilen Klebstoffzubereitungen beruhen, die im Wesentlichen aus nachwachsenden Rohstoffen, beispielsweise Stärkederivaten und Zucker, sowie Wasser bestehen und beispielsweise in den Offenlegungsschriften WO 2012/110594 A1 und WO 2015/107149 A1 genauer spezifiziert sind. Derartige Wasser basierte Zubereitungen stellen besondere Anforderungen an den das Pigment enthaltenden partikulären Feststoff, da für einen Glitzereffekt, der auch nach langer Lagerung der Klebstoffzubereitung erhalten bleiben soll, die Korrosion der Pigmente also die molekulardisperse Auflösung selbiger in der Klebstoffzubereitung verhindert werden muss.

Aus der US 2012/107625 A1 sind transluzente Zubereitungen geeignet zur Aufbringung einer Beschichtung auf einem Substrat bekannt. Die Zubereitungen stellen jedoch keine formstabilen transluzenten Zubereitungen, sondern Flüssigkeiten dar, die nach Auftrocknen auf Substraten Beschichtungen ausbilden.

In der DE 10 2009 037932 A1 und der DE 10 2009 037935 A1 sind Mehrschichtperlglanzpigmente mit einem mittleren Partikeldurchmesser D50 Wert umfassend einen Bereich von 3-250 µm und deren Verwendung für Lippenstifte, Lippenpflegestifte, Lip Gloss, Lip Liner, Eyeliner, Augenbrauenstifte und Haarwachse beschrieben.

Die Aufgabe der vorliegenden Erfindung besteht nun darin, eine Darreichungsform einer Zubereitung geeignet zur Aufbringung eines homogenen Feststoffpartikel enthaltenden Films auf flächigen Substraten bereitzustellen, die Feststoffpartikel in einer Menge und Größe enthält, die erforderlich ist, um einen durch die Feststoffpartikel vermittelten auf Interferenz und Reflektion im sichtbaren Wellenlängenbereich des Lichts beruhenden optischen Effekt in einem auf einem flächigen Substrat aufgebrachten Film der Zubereitung zu erzeugen (Glanzeffekt bzw. Glitzereffekt bei relativer Lageänderung). Gleichzeitig soll die Auftragung des Films nur im Kontaktbereich mit der Darreichungsform erfolgen und in weitgehend gleichmäßiger Schichtdicke. Der Film soll in einem Teilaspekt Klebeeigenschaften aufweisen, die es vermögen poröse Substrate wie Papier stoffschlüssig miteinander zu verbinden. Für diesen Teilaspekt gilt es, für Wasser basierte klebende Zubereitungen zu gewährleisten, dass der optische Effekt in der Zubereitung von Bestand ist und nicht durch Korrosion verloren geht.

Die allgemeine der Erfindung zugrundeliegende Aufgabe wird gelöst durch eine Wasser basierte, formstabile Zubereitung bestehend aus einer transluzenten Trägermasse enthaltend Gerüstsubstanzen ausgewählt aus C12- bis C22-Fettsäuren und/oder deren Salzen in einer Menge von insgesamt zumindest 1 Gew.-%, jedoch weniger als 15 Gew.-%, bezogen auf die Trägermasse und plättchenförmige Feststoffpartikel, wobei die plättchenförmigen Feststoffpartikel einen mittleren größten Partikeldurchmesser im Bereich von 2 bis 40 µm aufweisen und das dimensionslose Produkt aus partikulärem plättchenförmigen Feststoffanteil in Volumenprozent bezogen auf die Zubereitung und dem mittleren größten Partikeldurchmesser in Mikrometer zwischen 5 und 20 liegt.

Eine Zubereitung ist im Sinne der vorliegenden Erfindung formstabil, wenn eine zum Zylinder ausgeformte Masse der Zubereitung (10 Gramm) mit einer Grundfläche von 2 cm² bei Einwirkung einer stetig anwachsenden Kraft senkrecht zur Grundfläche des Zylinders bei 20 °C und 50% relativer Luftfeuchte erst oberhalb eines Druckes von 20N/cm² irreversibel deformiert wird. Die Einwirkung der Kraft und die Bestimmung des Eintritts der Deformation kann mittels eines Kraftmessgerätes verfolgt werden, bspw. mittels dem Texture Analyser TA-XT HiR (Stable Micro Systems Ltd.).

Eine formstabile Zubereitung ist im Sinne der vorliegenden Erfindung Wasser basiert, wenn sie zumindest 5 Gew.-% an Wasser enthält.

Unter Trägermasse wird im Sinne der vorliegenden Zubereitung derjenige Anteil der Zubereitung verstanden, der kein partikulärer, plättchenförmiger Feststoffanteil ist, wobei die Trägermasse transluzent ist. Eine Trägermasse ist transluzent, wenn selbige als zwischen zwei Glasplatten mit einem Schichtgewicht von zumindest 1 g/m² befindlicher Film sichtbares Licht (λ = 540 nm) bei Strahlengang vertikal zur Glasplattenoberfläche um nicht mehr als 20 % abschwächt.

Ein Feststoffanteil ist plättchenförmig, wenn er aus Einzelpartikeln besteht, die im orthogonal zur Achse ihrer größten Erstreckung durch den Schwerpunkt des Partikels verlaufenden Querschnitt eine Querschnittsfläche aufweisen, die ein Verhältnis von größter zu kleinster lateralen Ausdehnung von zumindest 4 : 1 besitzen. Der mittlere größte Partikeldurchmesser der plättchenförmigen Feststoffpartikel kann mittels Auswertung einer statistischen Probe der erfindungsgemäßen Zubereitung umfassend zumindest 50 plättchenförmige Partikel durch optische Einzelauswertung unter Zuhilfenahme lichtmikroskopischer Aufnahmen bestimmt werden.

Eine erfindungsgemäße Zubereitung weist eine hervorragende Druckfestigkeit bei gleichzeitig optimalen Abriebeigenschaften auf, die es erlauben die plättchenförmigen Feststoffpartikel homogen und ohne vereinzelte Überschüsse, bspw. in Form von Klümpchen, über einem flächigen, porösen Substrat, vorzugsweise Papier, abzureiben, sodass bei entsprechender Ausrüstung der Feststoffpartikel ein homogener Glitzereffekt über die gesamte Abriebsfläche zum Tragen kommen kann. Zusätzlich äußert sich der optimierte Abrieb in einer für den Benutzer angenehmeren Anwendung; die Zubereitung gleitet besser über die zu gestaltende Oberfläche. Weiterhin wird beim Abrieb von Hand gerade so viel Trägermasse abgerieben, dass bei entsprechender stofflicher Ausrüstung der Trägermasse eine Verklebung mit anderen flächigen porösen Substraten, vorzugsweise Papier, möglich ist.

Im Folgenden sind bevorzugte Ausführungsformen der erfindungsgemäßen Zubereitung aufgeführt.

Hinsichtlich der plättchenförmigen Feststoffpartikel ist für eine geeignete Ausrüstung selbiger zur Bereitstellung eines Glitzereffektes bevorzugt, wenn die Feststoffpartikel zumindest teilweise aus einem schichtförmig ausgebildeten anorganischen Material bestehen, dass vorzugsweise einen mindestens um den Faktor 1,4 höheren Brechungsindex aufweist als die transluzente Trägermasse. Ist diese physikalische Eigenschaft erfüllt, tritt über einen weiten Einfallswinkel relativ zur Oberfläche eines jeden Partikels Totalreflexion ein, so dass bei gegebenen Betrachtungswinkel auch bei statistischer räumlicher Ausrichtung der Partikel das auf einen abgeriebenen Film der Zubereitung einfallende Licht in einer Vielzahl von Lichtreflexen sichtbar wird (Glitzereffekt).

Weiterhin erfindungsgemäß bevorzugt ist, wenn die plättchenförmigen Feststoffpartikel einen Schichtaufbau aufweisen, bei dem das schichtförmig ausgebildete anorganische Material von zwei benachbarten Kunststoffschichten begrenzt wird, die jeweils transluzent sind. Hierüber wird gewährleistet, dass das schichtförmig ausgebildete anorganische Material weitestgehend vor Korrosion geschützt ist. Dies ist vorliegend von Bedeutung, da die Zubereitung Wasser basiert ist und als solche einen Lösungsdruck auf das anorganische Material ausübt, der die Dissoziation in ionogene Bestandteile und somit eine Korrosion der den Glitzereffekt hervorrufenden Schicht bewirkt.

Das schichtförmig ausgebildete anorganische Material, das dem plättchenförmigen Partikel die Eigenschaft verleiht als glänzend oder im Verbund einer Vielzahl solcher Partikel bei relativer Lageänderung als glitzernd wahrgenommen zu werden, kann grundsätzlich aus einer Vielzahl an Materialien oder Pigmenten ausgewählt sein. Erfindungsgemäß verwendbaren Materialien sind beispielsweise natürliche Perlglanzpigmente wie z.B. Fischsilber (Guanin/Hypoxanthin-Mischkristalle aus Fischschuppen) oder Perlmutt (aus vermahlenen Muschelschalen), monokristalline plättchenförmige Perlglanzpigmente wie z.B. Bismutoxychlorid sowie Perglanzpigmente auf Basis von Glimmer sowie Glimmer/Metalloxid, sowie Glimmer, die mit einer Metalloxidbeschichtung versehen wurden.

In einer bevorzugten erfindungsgemäßen Zubereitung ist das anorganische Material ausgewählt aus metallischem Zink, Kupfer und/oder Aluminium, aus Silikaten, und/oder aus Oxiden der Elemente Eisen, Titan, Zirkonium und/oder Aluminium. Insbesondere die metallischen Ausführungsformen gilt es gegenüber Korrosion zu schützen, so dass die Ausgestaltung der plättchenförmigen Feststoffpartikel, in der das metallische anorganische Material zwischen Kunststoffschichten angeordnet ist, besonders bevorzugt ist.

Bevorzugte Silikate, die als plättchenförmige Feststoffpartikel in erfindungsgemäßen Zubereitungen enthalten sein können, sind Glimmer und/oder mit Metalloxid beschichteter Glimmer beispielsweise ausgewählt aus Muscovit, Phlogopit, Paragonit, Biotit, Lepidolith und Margarit. Geeignete Metalloxide zur Beschichtung des Glimmers sind u.a. TiO₂, ZnO und Fe₂O₃.

Insgesamt ist die Art der Kunststoffschichten nicht limitierend für die Wirksamkeit der plättchenförmigen Feststoffpartikel enthaltend schichtförmig ausgebildetes anorganisches Material einen Glanz- oder Glitzereffekt zu vermitteln. Jedoch ist es bevorzugt, wenn der Kunststoff nicht zu solchen durch UV-Bestrahlung ausgelösten Alterungsprozessen neigt, in deren Verlauf eine Verfärbung oder Einfärbung der Feststoffpartikel resultiert. Insoweit sind erfindungsgemäß solche Zubereitungen bevorzugt, bei denen die Kunststoffschichten aus Polyethylenterephthalat, Polyethylen, Polypropylen oder Polycarbonat bestehen, besonders bevorzugt aus Polyethylenterephthalat.

In einer bevorzugten Ausführungsform der erfindungsgemäßen Zubereitung sind die plättchenförmigen Feststoffpartikel erhältlich durch Zerkleinern eines Kunststofffolienverbundes, der vorzugsweise eine Dicke von weniger als 40 µm, besonders bevorzugt von weniger als 20 µm aufweist, wobei der Verbund anorganisches Material zwischen zwei oder mehr Kunststofffolien schichtförmig ausgebildet enthält.

Die Eigenschaften der Zubereitung formstabil, aber dennoch gut abreibbar zu sein, wird vornehmlich durch die Anwesenheit der Gerüstsubstanzen bestimmt. Erfindungsgemäß enthält die transluzente Trägermasse daher zumindest 1 Gew.-%, vorzugsweise zumindest 2 Gew.-%, jedoch vorzugsweise nicht mehr als 10 Gew.-% an Gerüstsubstanzen ausgewählt aus C12- bis C22-Fettsäuren sowie deren Salze jeweils bezogen auf die Trägermasse. In diesen Mengenbereichen werden der Wasser basierten Zubereitung Gerüsteigenschaften zuteil, die es dem Fachmann erlauben über weite Bereiche organische Verbindungen zu additivieren, ohne die grundsätzlichen Eigenschaften hinsichtlich Abreibbarkeit und Formstabilität notwendigerweise zu verlieren.

Bevorzugte Vertreter der Salze der C12- bis C22-Fettsäuren sind im Rahmen der vorliegenden Erfindung ausgewählt aus Natrium-, Kalium- und/oder Kalzium-Salzen.

Für die Bereitstellung einer klebenden Zubereitung mit zufriedenstellendem Leistungsspektrum ist es unabdingbar, dass weitere organische Bestandteile additiviert werden, gleichzeitig muss der Wasseranteil hinreichend groß sein, um eben eine solche Additivierung zu ermöglichen. Vorliegend ist daher zunächst bevorzugt, dass eine erfindungsgemäße Zubereitung zumindest 20 Gew.-% Wasser enthält und zusätzlich für hinreichend verklebende Eigenschaften von porösen flächigen Substraten, vorzugsweise zumindest 10 Gew.-% an wasserlöslichen oder wasserdispergierbaren organischen Polymeren jeweils bezogen auf die Trägermasse. Ein organisches Polymer ist im Sinne der vorliegenden Erfindung wasserlöslich oder wasserdispergierbar, wenn bei einer Temperatur von 20 °C zumindest 100 g des Polymers in 1000 g entionisiertem Wasser (κ < 1µScm⁻¹) homogen gelöst und/oder mit einer mittleren Teilchendurchmesser von weniger als 200 nm dispergiert werden kann, ohne dass sich über einen Zeitraum von 10 h ein Bodensatz ausbildet.

In einer bevorzugten Ausführungsform einer erfindungsgemäßen Zubereitung, die insbesondere geeignet zur Verklebung von Papier ist, sind zumindest 20 Gew.-% an Stärkeethern bezogen auf die Trägermasse enthalten, die vorzugsweise als 40 Gew.-%ige wässrige Lösung bei 20 °C eine Viskosität von weniger als 200.000 mPas gemessen mit einem Brookfield-Viskosimeter aufweisen. Stärkeether sind in diesem Zusammenhang zu verstehen als zumindest teilweise veretherte Stärken. Besonders bevorzugt in diesem Zusammenhang sind Stärkeether, die als chemisch strukturelle Einheiten von Kondensationsprodukten zwischen den Hydroxygruppen der Anhydroglucose-Einheiten von Stärkemolekülen und Hydroxyl-Gruppen von Alkoholen und Carbonsäuren aufweisen. Bevorzugte Vertreter dieser Stärkederivate in einer erfindungsgemäßen Zubereitung sind Hydroxyalkylstärken, Carboxymethylstärken oder Hydroxyalkylcarboxymethylstärken als Mischether. Weiterhin ist bevorzugt, dass diese Stärkether in der aliphatischen Ethergruppe nicht mehr als 10 Kohlenstoffatome aufweisen, da anderenfalls ihre Wasserlöslichkeit deutlich reduziert wird, so dass entweder an Klebkraft oder an Transluzenz der Trägermasse eingebüßt wird. Einige wasserlösliche Stärkeethertypen werden daher bevorzugt eingesetzt. Hierzu gehören Hydroxyethyl- und Hydroxypropylstärke, sowie Carboxymethylstärke und Hydroxy-C2-C6-alkylcarboxymethylstärken, insbesondere Hydroxyethylcarboxymethylstärken, Hydroxypropylcarboxymethylstärken und/oder Hydroxyethylhydroxypropylcarboxymethylstärken.

Weiterhin ist für gute klebende Eigenschaften bevorzugt, wenn die erfindungsgemäße Zubereitung zumindest 10 Gew.-% an ein oder mehreren Verbindungen ausgewählt aus Mono-, Di- oder Trisacchariden und/oder Zuckeralkoholen, besonders bevorzugt Saccharose, jeweils bezogen auf die Trägermasse enthält. Bevorzugt liegt der Gesamtanteil an Mono-, Di- oder Trisacchariden und Zuckeralkoholen jedoch bei unterhalb von 30 Gew.-% bezogen auf die Trägermasse einer erfindungsgemäßen Zubereitung.

In einer besonders bevorzugten Ausführungsform enthält sind in der Trägermasse einer erfindungsgemäßen Zubereitung
a) 3-10 Gew.-% an C12- bis C22-Fettsäuren sowie deren Salze;
b) 20-50 Gew.-% an Stärkeethern;
c) 10-30 Gew.-% an Saccharose; und
d) zumindest 30 Gew.-% an Wasser
jeweils bezogen auf die Trägermasse enthalten.

Der pH-Wert der Trägermasse einer erfindungsgemäßen Zubereitung wird im Wesentlichen durch die zuvor genannten Bestandteile bestimmt und liegt daher im alkalischen Bereich, vorzugsweise bei zumindest 9, besonders bevorzugt bei zumindest 10, jedoch vorzugsweise von nicht höher als 12. Der pH-Wert der Trägermasse einer erfindungsgemäßen Zubereitung ist in einer 1 Gew.-%igen Lösung der Trägermasse in entionisiertem Wasser bei 20 °C zu bestimmen.

### Ausführungsbeispiele:

Zylindrische formstabile Zubereitungen mit einer Grundfläche von 2 cm2 und einer Masse von 10 Gramm auf Basis einer Trägermasse-Rezeptur (Tab.1) enthaltend variierende Mengen an Glitzerpartikeln wurden entsprechend der Tab. 2 hergestellt und bezüglich ihrer Abriebseigenschaften und des Auftretens eines Glitzereffektes bei Raumbeleuchtung (1200 Lumen; 3300K, Abstand Leuchtmittel-Probe: ca. 2 m) als auf Papier mit einem Flächengewicht von g/m² abgeriebener Film bewertet. Das Abreiben des Films erfolgte über eine Länge von 10 cm mit einem Anpressdruck von 5 N/cm² bei einem Neigungswinkel von 10° relativ zur Papieroberfläche. Die Glitzerpartikel bestehen aus einem zerkleinerten Polyethylenterephthalat-Folienverbund mit variierender Partikelgröße in dem das schichtförmig ausgebildete anorganische Material mit hohen Brechungsindex eingebracht ist.

| Tab. 1 Rezeptur der Trägermasse | |
|---|---|
| Verbindung | Menge / Gew.-% |
| Fettsäure C14-16 | 5,6 |
| Stärkeether | 23,9 |
| Saccharose | 20 |
| Wasser | 47 |

Es wird deutlich, dass gute Abriebseigenschaften bei gleichzeitig gut sichtbaren optischen Glitzereffekt nur in einem sehr schmalen Fenster in Abhängigkeit von Partikelgröße und Volumenanteil auftreten, so dass lediglich für erfindungsgemäße Zubereitungen das gewünschte Eigenschaftsprofil resultiert.

| Tab. 2 Zubereitungen enthaltend plättchenförmige Glitzerpartikel | | | | | |
|---|---|---|---|---|---|
| Nr. | Größe* / µm | Vol.-% | Abrieb¹ | Glittereffekt² | |
| | | | | im Film | im Stift |
| V1 | 62 | 2 | 1 | 1 | 2 |
| V2 | | 0,7 | 2 | 1 | 1 |
| V3 | 15 | 2 | 3 | 4 | 4 |
| E1 | | 0,7 | 4 | 4 | 4 |
| E2 | 8 | 2 | 5 | 4 | 4 |
| E3 | | 0,7 | 5 | 3 | 4 |
| E4 | 4 | 2 | 5 | 2 | 3 |
| V4 | | 0,7 | 5 | 1 | 1 |
| * | mittlerer größter Partikeldurchmesser bestimmt an 50 | | | | |
| | Einzelpartikeln einer Probe der losen Schüttung der | | | | |
| | Glitzerplättchen (Fa. Geotec / Geocrystal C R/R 008 HEX x 001) | | | | |
| 1 | 5 homogener Film; keine Klümpchen | | | | |
| | 4 im wesentlichen homogener Film; keine Klümpchen | | | | |
| | 3 im wesentlichen homogener Film; leichte Klümpchenbildung | | | | |
| | 2 deutliche Klümpchenbildung | | | | |
| | 1 starke Klümpchenbildung | | | | |
| 2 | 4 deutlich sichtbar | | | | |
| | 3 sichtbar | | | | |
| | 2 wahrnehmbar | | | | |
| | 1 kaum sichtbar | | | | |

## Patentansprüche

1. Wasser basierte, formstabile Zubereitung bestehend aus einer transluzenten Trägermasse enthaltend Gerüstsubstanzen ausgewählt aus C12- bis C22-Fettsäuren und/oder deren Salzen in einer Menge von insgesamt zumindest 1 Gew.-%, jedoch weniger als 15 Gew.-%, bezogen auf die Trägermasse und plättchenförmige Feststoffpartikel, wobei die plättchenförmigen Feststoffpartikel einen mittleren größten Partikeldurchmesser im Bereich von 2 bis 40 µm aufweisen und das dimensionslose Produkt aus partikulärem plättchenförmigen Feststoffanteil in Volumenprozent bezogen auf die Zubereitung und dem mittleren größten Partikeldurchmesser in Mikrometer zwischen 5 und 20 liegt.

2. Zubereitung nach Anspruch 1, **dadurch gekennzeichnet, dass** die plättchenförmigen Feststoffpartikel zumindest teilweise aus einem schichtförmig ausgebildeten anorganischen Material bestehen, dass vorzugsweise einen mindestens um den Faktor 1,4 höheren Brechungsindex aufweist als die Trägermasse.

3. Zubereitung nach Anspruch 2, **dadurch gekennzeichnet, dass** die plättchenförmigen Feststoffpartikel einen Schichtaufbau aufweisen, bei dem das schichtförmig ausgebildete anorganische Material von zwei benachbarten Kunststoffschichten begrenzt wird, die jeweils transluzent sind.

4. Zubereitung nach einem oder beiden der Ansprüche 2 und 3, **dadurch gekennzeichnet, dass** das anorganische Material ausgewählt ist aus metallischem Zink, Kupfer und/oder Aluminium, aus Silikaten, und/oder aus Oxiden der Elemente Eisen, Titan, Zirkonium und/oder Aluminium.

5. Zubereitung nach einem oder beiden der Ansprüche 3 und 4, **dadurch gekennzeichnet, dass** die Kunststoffschichten aus Polyethylenterephthalat, Polyethylen, Polypropylen oder Polycarbonat bestehen.

6. Zubereitung nach einem oder mehreren der vorherigen Ansprüche, **dadurch gekennzeichnet, dass** die transluzente Trägermasse zumindest 2 Gew.-%, jedoch vorzugsweise nicht mehr als 10 Gew.-% an Gerüstsubstanzen ausgewählt aus C12- bis C22-Fettsäuren sowie deren Salze jeweils bezogen auf die Trägermasse enthält.

7. Zubereitung nach einem oder mehreren der vorherigen Ansprüche, **dadurch gekennzeichnet, dass** die Salze der C12- bis C22-Fettsäuren ausgewählt sind aus Natrium-, Kalium- und/oder Kalzium-Salzen

8. Zubereitung nach einem oder mehreren der vorherigen Ansprüche, **dadurch gekennzeichnet, dass** die transluzente Trägermasse zumindest 20 Gew.-% Wasser bezogen auf die Trägermasse enthält.

9. Zubereitung nach einem oder mehreren der vorherigen Ansprüche, **dadurch gekennzeichnet, dass** die Trägermasse einen pH-Wert von zumindest 9, vorzugsweise von zumindest 10, jedoch vorzugsweise von nicht höher als 12 aufweist.

10. Zubereitung nach einem oder mehreren der Ansprüche 6 bis 9, **dadurch gekennzeichnet, dass** die Trägermasse zumindest 20 Gew.-% an Stärkeethern bezogen auf die Trägermasse enthält, die vorzugsweise als 40 Gew.-%ige wässrige Lösung bei 20 °C eine Viskosität von weniger als 200.000 mPas aufweisen.

11. Zubereitung nach Anspruch 10, **dadurch gekennzeichnet, dass** die Trägermasse zumindest 10 Gew.-% an Saccharose bezogen auf die Trägermasse enthält.

12. Zubereitung nach einem oder mehreren der vorherigen Ansprüche, **dadurch gekennzeichnet, dass** die Trägermasse
a) 3-10 Gew.-% an C12- bis C22-Fettsäuren sowie deren Salze;
b) 20-50 Gew.-% an Stärkeethern;
c) 10-30 Gew.-% an Saccharose; und
d) zumindest 30 Gew.-% an Wasser
jeweils bezogen auf die Trägermasse enthält.

## Claims

1. A water-based, dimensionally stable preparation consisting of a translucent carrier compound containing builders selected from C12 to C22 fatty acids and/or their salts in a total amount of at least 1 wt.%, but less than 15 wt.%, based on the carrier compound and flake-like solid particles, wherein the flake-like solid particles have a mean largest particle diameter in the range of from 2 to 40 µm and the dimensionless product of particulate flake-like solids content in percentage by volume based on the preparation and of the mean largest particle diameter in micrometers is between 5 and 20.

2. The preparation according to claim 1, **characterized in that** the flake-like solid particles consist at least in part of a layered inorganic material that preferably has a refraction index which is at least 1.4 times higher than that of the carrier compound.

3. The preparation according to claim 2, **characterized in that** the flake-like solid particles have a layered structure in which the layered inorganic material is bounded by two adjacent plastics layers, which are each translucent.

4. The preparation according to one or both of claims 2 and 3, **characterized in that** the inorganic material is selected from metal zinc, copper and/or aluminum, from silicates and/or from oxides of the elements iron, titanium, zirconium and/or aluminum.

5. The preparation according to one or both of claims 3 and 4, **characterized in that** the plastics layers consist of polyethylene terephthalate, polyethylene, polypropylene or polycarbonate.

6. The preparation according to one or more of the preceding claims, **characterized in that** the translucent carrier compound contains at least 2 wt.%, but preferably not more than 10 wt.%, of builders selected from C12 to C22 fatty acids and their salts, in each case based on the carrier compound.

7. The preparation according to one or more of the preceding claims, **characterized in that** the salts of the C12 to C22 fatty acids are selected from sodium, potassium and/or calcium salts.

8. The preparation according to one or more of the preceding claims, **characterized in that** the translucent carrier compound contains at least 20 wt.% water, based on the carrier compound.

9. The preparation according to one or more of the preceding claims, **characterized in that** the carrier compound has a pH value of at least 9, preferably at least 10 but preferably not higher than 12.

10. The preparation according to one or more of claims 6 to 9, **characterized in that** the carrier compound contains at least 20 wt.% of starch ethers, based on the carrier compound, which preferably have a viscosity of less than 200,000 mPas as a 40 wt.% aqueous solution at 20 °C.

11. The preparation according to claim 10, **characterized in that** the carrier compound contains at least 10 wt.% of sucrose, based on the carrier compound.

12. The preparation according to one or more of the preceding claims, **characterized in that** the carrier compound contains
a) 3-10 wt.% of C12 to C22 fatty acids and their salts;
b) 20-50 wt.% of starch ethers;
c) 10-30 wt.% of sucrose; and
d) at least 30 wt.% of water
in each case based on the carrier compound.

## Revendications

1. Préparation à forme stable à base d'eau, constituée d'un agent-support translucide contenant des adjuvants choisis parmi les acides gras en C12 à C22 et/ou leurs sels en une quantité totale d'au moins 1 % en poids mais inférieure à 15 % en poids, par rapport à l'agent-support et aux particules solides en forme de plaquette, les particules solides en forme de plaquette présentant un diamètre particulaire moyen le plus grand dans la plage de 2 à 40 µm et le produit sans dimension de la part de matière solide particulaire en forme de plaquette en pourcentage en volume par rapport à la préparation et le diamètre particulaire moyen le plus grand en micromètre se situant entre 5 et 20.

2. Préparation selon la revendication 1, **caractérisée en ce que** les particules solides en forme de plaquettes sont constituées au moins partiellement d'un matériau inorganique stratifié qui présente de préférence un indice de réfraction au moins 1,4 fois supérieur à celui de la masse de support.

3. Préparation selon la revendication 2, **caractérisée en ce que** les particules solides en forme de plaquettes ont une structure stratifiée, dans laquelle le matériau inorganique stratifié est délimité par deux couches plastiques adjacentes qui sont chacune translucides.

4. Préparation selon l'une ou les deux revendications 2 et 3, **caractérisée en ce que** le matériau inorganique est choisi parmi le zinc métallique, le cuivre et/ou l'aluminium, les silicates et/ou les oxydes des éléments fer, titane, zirconium et/ou aluminium.

5. Préparation selon l'une ou les deux revendications 3 et 4, **caractérisée en ce que** les couches plastiques sont constituées de polyéthylène téréphtalate, de polyéthylène, de polypropylène ou de polycarbonate.

6. Préparation selon l'une ou plusieurs des revendications précédentes, **caractérisée en ce que** la composition d'agent-support translucide contient au moins 2 % en poids, mais de préférence pas plus de 10 % en poids, de substances de structure choisies parmi les acides gras en C12 à C22 et leurs sels, par rapport à la composition d'agent-support.

7. Préparation selon l'une ou plusieurs des revendications précédentes, **caractérisée en ce que** les sels d'acides gras en C12 à C22 sont choisis parmi les sels de sodium, de potassium et/ou de calcium.

8. Préparation selon l'une ou plusieurs des revendications précédentes, **caractérisée en ce que** l'agent-support translucide contient au moins 20 % en poids d'eau par rapport à l'agent-support.

9. Préparation selon l'une ou plusieurs des revendications précédentes, **caractérisée en ce que** l'agent-support présente un pH d'au moins 9, de préférence d'au moins 10, mais de préférence pas supérieur à 12.

10. Préparation selon l'une ou plusieurs des revendications 6 à 9, **caractérisée en ce que** l'agent-support contient au moins 20 % en poids, par rapport à l'agent-support, d'éthers d'amidon qui ont de préférence une viscosité inférieure à 200 000 mPas en solution aqueuse à 40 % en poids à 20 °C.

11. Préparation selon la revendication 10, **caractérisée en ce que** l'agent-support contient au moins 10 % en poids de saccharose par rapport à l'agent-support.

12. Préparation selon l'une ou plusieurs des revendications précédentes, **caractérisée en ce que** l'agent-support contient
a) 3 à 10 % en poids d'acides gras en C12 à C22 et de leurs sels ;
b) 20 à 50 % en poids d'éthers d'amidon ;
c) 10 à 30 % en poids de saccharose ; et
d) au moins 30 % en poids d'eau
à chaque fois par rapport à l'agent-support.
